Europäisches Patentamt

European Patent Office

Office européen des brevets

(11) Publication number: **0 072 379**
**B1**

# EUROPEAN PATENT SPECIFICATION

(45) Date of publication of patent specification: **09.10.85**

(51) Int. Cl.⁴: **B 01 D 9/02, C 10 G 73/32**

(21) Application number: **81303704.1**

(22) Date of filing: **14.08.81**

(54) **Mechanically agitated liquid-vapor contacting apparatus.**

(43) Date of publication of application:
**23.02.83 Bulletin 83/08**

(45) Publication of the grant of the patent:
**09.10.85 Bulletin 85/41**

(84) Designated Contracting States:
**DE FR GB IT NL**

(56) References cited:
**US-A-3 720 599**
**US-A-4 216 075**

(73) Proprietor: **Exxon Research and Engineering Company**
**P.O.Box 390 180 Park Avenue**
**Florham Park New Jersey 07932 (US)**

(72) Inventor: **Ryan, Douglas Giles**
**145 Andrea Drive**
**Rockaway New Jersey (US)**

(74) Representative: **Somers, Harold Arnold et al**
**ESSO Engineering (Europe) Ltd. Patents & Licences Apex Tower High Street**
**New Malden Surrey KT3 4DJ (GB)**

Courier Press, Leamington Spa, England.

## Description

### Background of the invention
### 1. Field of the invention

This invention relates to a vertical, multistage, mechanically agitated liquid-vapor contacting apparatus. More particularly, this invention relates to a mechanically agitated, multi-staged apparatus for liquid-liquid and liquid-vapor contacting. Still more particularly, this invention relates to vertical, multistaged, constant pressure towers containing mechanical agitators useful for dewaxing waxy hydrocarbon oils using liquid autorefrigerative dewaxing solvents or a combination of non-autorefrigerant and autorefrigerant dewaxing solvents.

### 2. Description of the prior art

It is well known in the art to dewax wax-containing hydrocarbon oils, particularly the lube oil fractions of petroleum oil, in order to remove at least a portion of the wax therefrom to obtain a dewaxed oil of reduced cloud and pour points. The most common method of removing the wax or waxy constituents from waxy hydrocarbon oils is via the use of various solvent dewaxing processes. In solvent dewaxing processes the temperature of the wax-containing oil is lowered sufficiently to precipitate the wax therefrom as solid crystals of wax. At the same time, solvents are added to the waxy oil in order to improve the fluidity and reduce the viscosity thereof so that various filtration or centrifugation processes can be used to separate the solid particles of the wax from the dewaxed oil. Strong was antisolvents (weak oil solvents) such as MEK are often added to decrease wax solubility in the oil/solvent mixture while strong oil solvents (weak wax antisolvents) such as MIBK or toluene are used to modify the solubility characteristics of the solvent so as to allow wax precipitation, while at the same time avoiding oil immiscibility at wax separation temperatures. Solvent dewaxing processes produce what is known as a pour-filter temperature spread. This is the temperature differential between the wax filtering temperature and the pour point of the dewaxed oil. This pour-filter temperature spread is greater when more nonpolar hydrocarbon solvents are used than with more polar solvents such as ketones. Thus, an autorefrigerant dewaxing process employing propane can produce a pour-filter spread of 22.2°C (40°F), which means that the wax filtration must be done at −40°C (−40°F.) in order to produce a dewaxed oil having a pour point of −17.8°C (0°F). When ketones or mixtures of ketone and aromatic solvents are used, the pour-filter spread may range from 0°C to 11.1°C (0°F. to 20°F.) depending on the oil and solvent used.

Both ketone and autorefrigerant dewaxing processes have certain advantages and disadvantages. Thus, although ketone dewaxing processes result in a lower pour-filter spread at the wax filtration temperature and although larger wax crystals can be grown in a ketone environment than in an autorefrigerant environment without dewaxing aid, ketones are relatively non-volatile compared to autorefrigerants, and, therefore, chilling of the solvent/oil mixture must be accomplished by either indirect means or by mixing cold ketone solvent with the oil. In the latter case, practical considerations limit the amount and temperature of cold ketone solvent that can be added and the termperature to which the solvent/oil mixture can be cooled. Therefore, some means of indirectly chilling the waxy slurry following the addition of solvent is required in all ketone dewaxing processes in order to bring the slurry down to the required wax filtration temperature. The most common method of indirect chilling is via the use of scraped surface chillers which are expensive and difficult to maintain. Also, the scraped surface chillers tend to damage the wax crystals by the shearing action of the scraper blades.

Conversely, wax crystals grown in an autorefrigerant environment, such as propane or propylene, are generally small which necessitates the use of costly dewaxing aids in order to achieve good filtration rates, although evaporation of the autorefrigerant enables one to reach the wax filtration temperature without the necessity of employing scraped-surface chillers or indirect heat exchangers following the solvent dewaxing operation. Additionally, it has been found necessary to employ batch chilling in autorefrigerant dewaxing processes in order to allow a gradual reduction in pressure. This prevents sudden flashing of the autorefrigerant at the point of pressure release, thereby avoiding sudden large temperature drops of the oil slurry (shock chilling), which would results in even smaller wax crystals and concomitant slower filter rates of the wax from the dewaxed oil.

In some ketone solvent dewaxing processes, the waxy oil and solvent, at a temperature above the cloud point of the oil, are mixed before being cooled. This solution is then cooled at a uniform, slow rate under conditions which avoid agitation of the solution as the wax precipitates out. In another method, ketone dewaxing solvent is added to the oil at several points along a chilling apparatus, but the waxy oil is first chilled without solvent until some wax crystallization has occurred and the mixture has thickened considerably, after which a first increment of solvent, at the temperature of the oil, is introduced in order to maintain fluidity. Cooling continues, more wax is precipitated out and a second increment of solvent, at the temperature of the mixture, is added to maintain fluidity. This process is repeated until a temperature typically ranging from about −1.1 to 15.6°C (30°F. to 60°F.) is reached, at which point an additional amount of solvent at the same temperature as the mixture is added in order to reduce the viscosity of the mixture which is further chilled in scraped-surface chillers to the desired filtration temperature. In these processes, if the solvent is introduced at a temperature lower than that of the oil or oil/ solvent mixture, shock chilling occurs resulting in the formation of small and/or acicula shaped waxy crystals with attendant poor filter rate.

It is now well known that the adverse shock chilling effect can be overcome by introducing the waxy oil into an elongated, staged cooling zone or tower at a temperature above its cloud point and incrementally introducing cold dewaxing solvent into said zone, along a plurality of points or stages therein, while maintaining a high degree of agitation in said stages, so as to effect substantially instantaneous mixing of the solvent and wax/oil mixture as they progress through said zone. The basic concept of this commercially successful process is disclosed in U.S. Patent No. 3,773,650, the disclosures of which are incorporated herein by reference and shall hereinafter be referred to an DILCHILL* dewaxing process.

Commercially successful processes employing autorefrigerative cooling, wherein the waxy oil is mixed with liquid autorefrigerant which is permitted to evaporate thereby cooling the oil by the latent heat of evaporation, are batch or semi-batch operations. This mixture of liquid autorefrigerant and oil are introduced into an expansion chamber wherein the pressure is slowly reduced to achieve controlled evaporation of the autorefrigerant and controlled cooling of the oil, thus avoiding the shock chilling which would result if the autorefrigerant were allowed to flash off. However, batch processes are cumbersome, difficult to operate and energy inefficient.

A number of attempts have been made to develop a continuous autorefrigerant process for dewaxing oils, including combinations of ketone/autorefrigerant processes. Thus, U.S. Patent No. 3,549,513 discloses an autorefrigerative batch dewaxing process that is described as continuous, but which really operates via the sequential use of a multiple number of batch chillers or expansion chambers. Waxy oil is diluted with an aromatic/ketone solvent mixture and with liquid autorefrigerant and cooling is achieved by controlled evaporation of the autorefrigerant by reducing the pressure in each batch chamber in a manner such that the autorefrigerant evaporates at a controlled rate. U.S. Patent 3,658,688 discloses an autorefrigerant dewaxing process wherein a portion of the wax is precipitated from the oil in a DILCHILL dewaxing tower wherein the cooling occurs by the injection of cold autorefrigerant into the tower to produce a waxy slurry, followed by autorefrigerative cooling of the slurry in batch chillers. U.S. Patent 2,202,542 suggests a continuous autorefrigerant dewaxing process wherein a waxy oil above its cloud point is premixed with warm, liquid propane. This mixture is introduced into a multi-staged cooling tower and liquid $CO_2$ is injected into each stage out of direct contact with the oil. This patent emphasizes the point that the liquid

$CO_2$ must be introduced into each stage out of direct contact with the oil in the tower in order to avoid shock chilling. However, this is impractical because the vapor loads on the tower would be far in excess of what could be accommodated in a reasonably sized commercial tower. Also, refrigeration requirements are three times those normally needed and condition for nucleation and growth of wax crystals are poor. U.S. Patent 3,720,599 discloses a continuous process for dewaxing a waxy petroleum oil stock wherein the oil is premixed with acetone. This mixture is then introduced into a horizontal, elongated chilling vessel containing a plurality of stages operating at different pressures, with the pressure in each stage controlled by a back pressure regulator on each stage. Liquid autorefrigerant is introduced into the stages along the length of the chilling vessel while maintaining a high degree of agitation therein to avoid shock chilling. The autorefrigerant is partially evaporated in each stage, with the amount of evaporation being controlled by the pressure in each stage. Unfortunately, there are problems which currently preclude commercialization of this process, not the least of which is a practical, efficient way of getting the slurry to flow from stage to stage without plugging up the entire apparatus with waxy or without multiple transfer pumps which would be expensive and would also tend to destroy the wax crystal structure. Another disadvantage entails the impracticality of providing separately driven agitators for each stage and the mechanical difficulties associated with a common horizontal drive shaft. Additionally, 3,720,599 provides for the nucleation and initial growth of wax to occur in the presence of substantial amounts (i.e., >25%) of autorefrigerant solvent, which, in the absence of dewaxing aid, has been found to produce wax crystals inferior to those produced when nucleation occurs by chilling in the presence of ketones or ketone/aromatic solvents followed by autorefrigeration. For example, when mixtures of ketone and high percentages (>40%) of propylene were used in the DILCHILL dewaxing process, a distillate oil/wax slurry was produced which filtered very poorly.

It would be an improvement to the art if one could invent a gas-liquid contacting apparatus that would be suitable to use for combining both ketone and autorefrigerant solvent dewaxing processes into a continuous process, in a single apparatus, and in such a manner so as to carefully form the wax nuclei and begin crystal growth in a substantially non-autorefrigerant solvent environment such as ketone, to achieve large, stable, spherical crystals without the use of dewaxing aid and then further precipitate additional wax without destroying the spheres via direct contact with an evaporating autorefrigerant, thereby avoiding the need for scraped surface chillers following the ketone dewaxing step.

US—A—4216075 and corresponding EP—A—36460 both describe a continuous autorefrigerant

---

*Registered service mark of Exxon Research and Engineering Company.

process and apparatus for solvent-dewaxing waxy oils which comprise the steps of:

(a) prediluting the waxy oil with a non-autorefrigerant dewaxing solvent to form a mixture of waxy oil and solvent;

(b) passing said mixture from step (a), at a temperature above its cloud point, into the top of a continuous, autorefrigerative chilling zone which comprises a vertical, elongated, multi-staged tower operating at a constant pressure wherein each stage contains a liquid space and a vapor space above the liquid space, each of said vapor spaces also containing means for removal of autorefrigerant vapor therefrom;

(c) cooling said mixture as it passes down from stage to stage in said chilling zone to precipitate wax from said oil thereby forming a slurry comprising solid particles of wax and a dewaxed oil/solvent solution and further chilling the so-formed slurry by contacting same, in said chilling zone, with a liquid autorefrigerant which is introduced under flow rate control conditions into a plurality of the stages in said zone and allowed to evaporate therein so as to achieve an average cooling rate of the slurry in said zone ranging from between 0.06 to 11.11°C (0.1 to 20°F) per minute with an average temperature drop across each stage into which said liquid autorefrigerant is introduced and evaporated ranging from between about 1.11 to 11.11°C (2 to 20°F) and wherein the evaporated autorefrigerant is removed from each of said stages into which said liquid autorefrigerant was injected in a manner such that the autorefrigerant vapor formed in any given stage does not pass through the slurry on all of the stages in the tower above said stage; and

(d) separating the wax from the slurry to obtain wax and a dewaxed oil solution.

In a preferred embodiment, the prediluted oil contains a dewaxing aid and is introduced into the top of the chilling zone at a temperature at or near its cloud point and the slurry is chilled down to the wax filtration temperature in said chilling zone.

US—A—4216075 and EP—A—36460 further describe an alternative to the foregoing employing cold non-autorefrigerative dewaxing solvent in which case the process comprises the step of passing the waxy oil, at a temperature above its cloud point, into a first chilling zone wherein a portion of the wax is precipitated from the oil by cooling same in the presence of a non-autorefrigerant dewaxing solvent to form a slurry of oil, solvent and solid particles of wax, and then passing the resultant slurry to a continuous autorefrigerative chilling zone as described for step (b) *supra*.

The autorefrigerative chilling zone is a vertical, elongated, multi-staged tower operating at a constant pressure and in a manner such that the waxy oil and slurry pass down from stage to stage of the tower by gravity, and cold liquid autorefrigerant is injected into each stage of the tower wherein it contacts the warmer oil or slurry and cools same via autorefrigerative evaporation. At least a portion of the cold, liquid autorefrigerant immediately evaporates on contact with the warmer oil or slurry which results in agitation in the area of contact sufficient to achieve substantially instantaneous mixing (i.e., about one second or less) of the oil or slurry with the cold liquid autorefrigeratant, thus avoiding the shock chilling effect. As hereinbefore stated, *supra*, each stage contains means for removing the autorefrigerant vapors therefrom and the slurry flows down from stage to stage in the tower by the action of gravity. The cooled slurry exiting this chilling zone is then passed to means, such as rotary pressure filters, for separating the wax from the dewaxed oil/solvent mixture.

The autorefrigerative chilling zone or tower operates at a constant gauge pressure within the range of from about 0 to 344.75 kPa (0 to 50 psig) and more preferably from about 13.79 to 137.90 kPa (2 to 20 psig).

A preferred autorefrigerant tower comprises a plurality of discrete stages each containing an autorefrigerant vapor exit, vapor space, slurry tray, slurry downcomer, weir and liquid autorefrigerant sparger. In operation, cooled slurry of waxy oil and dewaxing solvent is fed to the autorefrigerant tower and passes through a downcomer wherein it is directed downward and under the surface of the slurry held up on the first (top) stage. Liquid propylene is introduced into the first stage through a sparger 64 having holes which are directed downward, opposing slurry flow through the stage. Some of the propylene vaporizes as it enters the warmer slurry and the vapors bubble up through the slurry, with the remainder of the propylene going into solution. Propylene vapors are removed through vapor exit of the first stage and the cooled slurry flows over a weir and enters a downcomer which directs it under the surface of slurry on the next stage below. This process is repeated from stage to stage as the slurry passes down the tower until it exits from a slurry outlet at the base of the tower at a wax filtration temperature.

Summary of the invention

The present invention provides an apparatus comprising a substantially vertical, elongated tower having a feed inlet in an upper portion thereof and liquid and vapor outlets in a lower portion, said apparatus containing a plurality of vertically spaced, substantially horizontally disposed stages therein, means for mechanically agitating a liquid or vapor, in use, introduced into each of said stages with liquid present, in use, in said stages by means of agitator means mounted to a single shaft driven by a single driver means, and means for separating said stages one from the other while defining fluid communication channels between said stages, said stages comprising (a) liquid tray means substantially horizontally attached to the interior walls of the elongated, substantially vertical tower, each tray means having a central opening; (b) weir means attached substantially vertically to the liquid tray means along the interior perimeter of the tray means at some distance from the interior walls of the tower thereby defining (1) a liquid-vapor stage (hereafter termed "the recited liquid-vapor stage") comprising a liquid space and a vapor space over said liquid space, which, in use, maintains a predetermined amount of liquid on said liquid tray means in said liquid space between the weir and the tower wall and (2) a fluid communication channel; (c) a first liquid downcomer means communicating with said stage separation means to define a liquid communication channel in the fluid communication channel leading from the liquid space of the liquid-vapor stage immediately above the recited liquid-vapor stage to the recited liquid-vapor stage; (d) a second liquid downcomer means defining a second liquid communication channel leading from the liquid space of the recited liquid-vapor stage to the liquid space of the liquid-vapor stage next below the recited liquid-vapor stage; (e) a first vapor communication channel leading from the vapor space immediately above the liquid space of the liquid-vapor stage next above the recited liquid-vapor stage to the vapor space of the recited liquid-vapor stage, said first vapor communication channel being in the fluid communication channel and exteriorly defined by the radially inner wall of said first liquid downcomer means; (f) vapor downcomer means defining a second vapor communication channel leading from the vapor stage of the recited liquid-vapor stage to the vapor space immediately above the liquid space of the liquid-vapor stage next below the recited liquid-vapor stage, wherein the liquid downcomers and vapor downcomers maintain the liquids and vapors as separated distinct streams forced to flow downwardly in substantially parallel flow by the absence of vapor outlet means at the top of the tower and wherein the vapor stream does not pass through any liquid in any successive lower stage; (g) means for introducing a liquid or a vapor from a source external to said apparatus into the liquid space of the liquid-vapor stage at a point below the liquid level in the liquid-vapor stage, or if only liquid is introduced, at a point above the liquid level of the liquid-vapor stage.

The present invention also provides a method of dewaxing a waxy hydrocarbon oil employing the apparatus as described above comprising the steps of introducing a mixture comprising the waxy hydrocarbon oil and a non-autorefrigerative dewaxing solvent into the feed inlet of substantially vertical, elongated tower so that said mixture or a slurry derived therefrom and comprising hydrocarbon oil, dewaxing solvent and wax is maintained in the liquid space of each liquid-vapor stage, introducing a cold autorefrigerative dewaxing solvent into each liquid-vapor stage from a source external to said apparatus, maintaining the gauge pressure within the tower within the range of from 0 to 344.75 kPa (0 to 50 psig), agitating said mixture or slurry in the liquid space of each liquid-vapor stage by rotating said shaft and the agitator means mounted thereto, and separately recovering waxy slurry and vaporized autorefrigerant respectively from the liquid and vapor outlets in the lower portion of the tower.

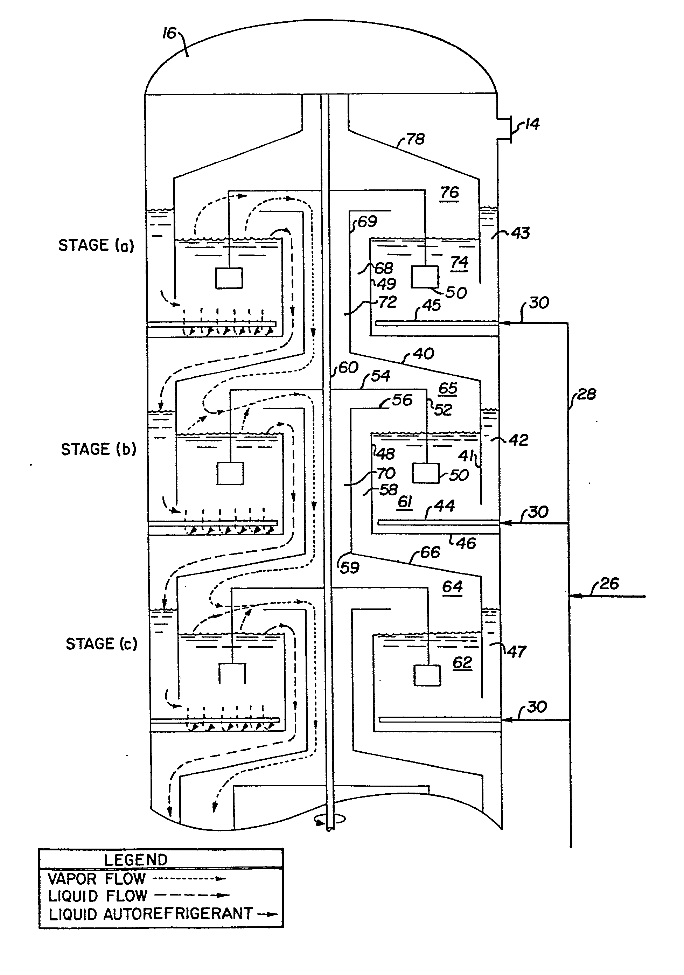

Description of the drawing

The attached figure illustrates a section of an apparatus comprising a preferred embodiment of this invention.

Detailed description

Referring to the drawing, the apparatus comprises a vertical, cylindrical plurality of vertically spaced, horizontally disposed stages. For the sake of brevity, only three stages are illustrated, stages (a), (b), and (c). It can be seen that stage (b) is separated from stages (a) and (c) via stage separator means 40 and 66. The stage separator means may be simply metal discs or cones concentric with the walls of the tower and having an opening in the center thereof to form an annulus around vertical shaft 60. This hole will be of a size sufficient to allow passage therethrough of shaft 60 and passage of vapors from the stage above the separator to the stage below the separator. The vapor and liquid downcomer means are defined primarily by a series of concentric, cylindrically shaped baffles. Thus, for stage (b) the liquid downcomer means illustrated by flow path 42 feeding liquid space 61 is defined by the cylindrical wall of the apparatus and cylindrical baffle 41. The top of baffle 41 is connected to the outer circumference of separator 40 which serves to seal vapors in stage (b) in vapor space 65. Connecting the top of baffle 41 to separator 40 also serves to provide a path for liquid from stage (a) coming down downcomer means 68 to downcomer means 42. Liquid tray means 46 may be a flat plate in the shape of an annulus, the outer perimeter of which is attached to the wall of the apparatus with the inner perimeter being attached to weir means 48, thus defining liquid space 61. Weir means 48 may also be a cylindrically shaped baffle the bottom of which is attached to tray means 46. The liquid downcomer means is a conduit shown as liquid flow path 58 and is defined in part by weir means 48 and in part by cylindrical baffle 59. Baffle 59 may also be merely a metal cylinder the top of which is attached to baffle 56 and the bottom being attached to separator means 66. It is readily seen that vapor downcomer means 70 is also a conduit defined by the annulus formed between shaft 60 and cylindrical baffle 59. Baffle 56 forms part of the vapor removal means and also serves as a splash shield to prevent liquid from entering vapor conduit 70. Liquid mixing means is shown as a combination of disc 54, arms 52 and paddles 50. Rotating shaft 60 is attached to and passes through the middle of disc 54. A plurality of arms 52 depend downwardly from the outer periphery of disc 54 and the lower ends thereof are attached to paddles 50. Liquid or vapor is introduced into liquid space 61 of stage (b) from a source outside the apparatus via means 44 which may be a simple liquid or vapor distributor such as a ring distributor which may be a cylindrical, perforated pipe attached to outside liquid or vapor source 30 by means not shown.

The invention will be more readily illustrated by reference to a preferred embodiment.

Preferred embodiments

Although liquid may be introduced into the apparatus of this invention for any desired purpose such as extraction, washing, reacting, dewaxing, etc., in preferred embodiments, the apparatus of this invention will be used as an autorefrigerant solvent dewaxing tower operating at a gauge pressure of from about 0 to 344.75 kPa (0 to 50 psig). Thus, a waxy hydrocarbon oil such as a petroleum lube oil fraction, at a temperature above its cloud point and prediluted with non-autorefrigerative dewaxing solvent, such as ketone, is introduced into tower 16 via feed inlet 14 and separator 78, enters downcomer 43 and is directed into the liquid space 74 of stage (a). At the same time, a cold autorefrigerant dewaxing solvent such as liquid propane or propylene is fed into line 26, manifold 28, multiple injection points 30 (one of which is connected to distributor 45 by means not shown) and to ring distributor 45 which is a perforated pipe with the perforations preferably facing downward so that the flow of liquid autorefrigerant opposes the flow of the prediluted warm waxy oil entering liquid space 74 from downcomer 43. Most of the liquid autorefrigerant evaporates on contact with the prediluted oil thereby cooling same, with the autorefrigerant vapors produced rising up into vapor space 76 and passing down through downcomer 72 to vapor space 65 of stage (b) wherein the vapors are combined with autorefrigerant vapors produced in stage (b), the combined vapors then passing down through vapor downcomer 70 to vapor space 64 of stage (c), etc. This process is sequentially repeated down the tower. The liquid autorefrigerant is mixed with the warm, waxy oil substantially instantaneously via the turbulence produced by the evaporating autorefrigerant and the mixing action of paddles (50). Thus, the oil is cooled in stage (a) and passes over weir 49 into liquid downcomer 68, across at least a portion of the upper surface of separator 40 and into downcomer 42 wherein it is directed into the liquid space 61 of stage (b) wherein the process is repeated. Thus, the oil is further chilled in liquid space 61 of stage (b) by the injection of liquid autorefrigerant into the oil from distributor 44. The further chilled oil passes over weir 48 wherein it enters downcomer 58 and passes down into downcomer 47 of stage (c) wherein it is directed into liquid space 62. Thus, the process repeats itself as the oil passes from stage to stage down through the tower. This produces a waxy slurry which is further chilled down to wax filtration temperature and then fed directly from the apparatus to rotary pressure filters to separate the wax from the oil without having to first be passed to either batch chillers or through scraped surface chillers.

One of the unusual and useful features of using the apparatus of the present invention for constant pressure autorefrigerative dewaxing lies in the parallel flow of both the liquid and vapor down the tower. This is schematically represented in the figure by dashed lines for liquid flow and dotted lines for vapor flow. Downflow vapors avoid chilling the metal surfaces in the apparatus to a temperature lower than the oil or waxy slurry that contacts same which could result in wax deposition and/or shock chilling of the waxy oil. The vapor formed in stage (a) bubbles through the oil and leaves the stage at about the same temperature as the oil. Thus, both the oil and vapor leave stage (a) at approximately the same temperature which results in both surfaces of baffle 69 and both surfaces of stage separator 40 being at the same temperature. If the vapor was colder than the oily liquid coming from stage (a) the vapor would cool baffle 69 and stage separator 40 to a temperature lower than the oily liquid passing through 69 and across 40. This could cause wax deposition of the oil and/or shock chilling. Similarly in stage (b), the vapor formed therein leaves the surface of the oily liquid at the same temperature as said liquid, mixes with the warmer vapor from stage (a), with the result that as the vapors continually mix and pass from stage to stage down the tower, the mixed vapors are either warmer or at the same temperature as the oily liquid or slurry at the same general location in the tower. This avoids wax buildup and shock chilling of the oil.

In yet another preferred embodiment of this invention, waxy oil or a wax/oil slurry can be introduced as feed to said tower and cold ketone dewaxing solvent or any non-autorefrigerant dewaxing solvent can be injected into the first several stages to form wax crystals in a ketone or non-autorefrigerant environment with liquid autorefrigerant being injected into those later, subsequent stages in which the liquid contained therein is a waxy slurry. Still further a waxy slurry may be introduced into the apparatus as the feed with further chilling and wax precipitation therefrom occurring by constant pressure autorefrigerative chilling in the apparatus.

It should be understood, of course, that it is within the scope and spirit of this invention to use one or more units of the apparatus either in series or in parallel.

**Claims**

1. An apparatus comprising a substantially vertical, elongated tower (16) having a feed inlet (14) in an upper portion thereof and liquid and vapor outlets in a lower portion, said apparatus containing a plurality of vertically spaced, substantially horizontally disposed stages therein, means for mechanically agitating a liquid or vapor, in use, introduced into each of said stages with liquid present, in use, in said stages by means of agitator means (50) mounted to a single shaft (60) driven by a single driver means, and means (66, 40) for separating said stages one from the other while defining fluid communication channels (58, 70) between said stages, said stages comprising (a) liquid tray means (46) substantially horizontally attached to the interior walls of the elongated, substantially vertical tower, each tray means (46) having a central opening; (b) weir means (48) attached substantially vertically to the liquid tray means along the interior perimeter of the tray means at some distance from the interior walls of the tower thereby defining (1) a liquid-vapor stage (hereafter termed "the recited liquid-vapor stage") comprising a liquid space (61) and a vapor space (65) over said liquid space, which, in use, maintains a predetermined amount of liquid on said liquid tray means in said liquid space between the weir and the tower wall, and (2) a fluid communication channel (58); (c) a first liquid downcomer means (68) communicating with said stage separation means (40) to define a liquid communication channel in the fluid communication channel leading from the liquid space (74) of the liquid-vapor stage immediately above the recited liquid-vapor stage to the recited liquid-vapor stage; (d) a second liquid downcomer means (58) defining a second liquid communication channel leading from the liquid space (61) of the recited liquid-vapor stage to the liquid space (62) of the liquid-vapor stage next below the recited liquid-vapor stage (61); (e) a first vapor communication channel (72) leading from the vapor space (76) immediately above the liquid space (74) ox the liquid-vapor stage next above the recited liquid-vapor stage to the vapor space (65) of the recited liquid-vapor stage, said first vapor communication channel (72) being in the fluid communication channel and exteriorly defined by the radially inner wall (69) of said first liquid downcomer means (68); (f) vapor downcomer means defining a second vapor communication channel (70) leading from the vapor stage (65) of the recited liquid-vapor stage to the vapor space (64) immediately above the liquid space of the liquid-vapor stage next below the recited liquid-vapor stage, wherein the liquid downcomers (68, 58) and vapor downcomers (72, 70) maintain the liquids and vapors as separated distinct streams forced to flow downwardly in substantially parallel flow by the absence of vapor outlet means at the top of the tower and wherein the vapor stream does not pass through any liquid in any successive lower stage (g) means (45, 44) for introducing liquid or a vapor from a source (30, 26) external to said apparatus into the liquid space (74, 61) of the liquid-vapor stage at a point below the liquid level in the liquid-vapor stage, or if only liquid is introduced, at a point above the liquid level of the liquid-vapor stage.

2. The apparatus of claim 1 wherein said vapor and liquid downcomer means (70, 58 respectively) comprise conduits formed by concentric, cylindrical baffles.

3. The apparatus of claim 2 wherein said stage separation means (40) comprises a cone-shaped baffle with a hole in the middle thereof so that said separator has an outer and an inner perimeter.

4. The apparatus of claim 3 wherein the outer perimeter of said stage separator (40) is attached to the top of a cylindrical baffle (41) which defines a liquid downcomer (42) for directing liquid from an upper stage into the liquid space (61) of said stage.

5. A method of dewaxing a waxy hydrocarbon oil employing the apparatus of any one of claims 1 to 4 comprising the steps of introducing a mixture comprising the waxy hydrocarbon oil and a non-autorefrigerative dewaxing solvent into the feed inlet (14) of the substantially vertical, elongated tower (16) so that said mixture or a slurry derived therefrom and comprising hydrocarbon oil, dewaxing solvent and wax is maintained in the liquid space of each liquid-vapor stage, introducing (44) a cold autorefrigerative dewaxing solvent into each liquid-vapor stage from a source (26, 28, 30) external to said apparatus, maintaining the gauge pressure within the tower (16) within the range of from 0 to 344.75 kPa (0 to 50 psig), agitating said mixture or slurry in the liquid space of each liquid-vapor stage by rotating said shaft 60 and the agitator means (50) mounted thereto, and separately recovering waxy slurry and vaporized autorefrigerant respectively from the liquid and vapor outlets in the lower portion of the tower.

**Patentansprüche**

1. Vorrichtung mit einem im wesentlichen vertikalen, länglichen Turm (16), der einen Speiseeinlaß (14) in einem oberen Abschnitt davon und Flüssigkeits- und Dampfauslässe in einem unteren Abschnitt aufweist, wobei die Vorrichtung eine Mehrzahl von vertikalbeabstandeten, im wesentlichen horizontal angeordnet Stufen darin, Mittel zum mechanischen Rühren einer Flüssigkeit oder eines Dampfes, die in jede der Stufen eingeleitet werden, wobei im Betrieb Flüssigkeit in den Stufen durch Rührmittel (50) vorhanden ist, die an einer einzigen Welle (60) angebracht sind, welche von einem einzigen Antriebsmittel getrieben ist, und Mittel (66, 40) zum Trennen der Stufen voneinander während der Bildung von Fluidkommunikationskanälen (58, 70) zwischen den Stufen aufweist, wobei die Stufen aufweisen: (a) Flüssigkeitsbodenmittel (46), die im wesentlichen horizontal an den Innenwänden des länglichen, im wesentlichen vertikalen Turms angebracht sind, wobei jedes Bodenmittel (46) eine Zentralöffnung besitzt; (b) Wehrmittel (48), die im wesentlichen senkrecht an den Flüssigkeitsbodenmitteln entlang der Innenränder der Bodenmittel in einem gewissen Abstand von den Innenwänden des Turms angebracht sind, wodurch sie (1) eine Flüssigkeits-Dampf-Stufe (nachfolgend "die genannte Flüssigkeits-Dampf-Stufe" genannt) mit einem Flüssigkeitsraum (61) und einem Dampfraum (65) über dem Flüssigkeitsraum bilden, welche im Betrieb eine vorgegebene Menge von Flüssigkeit auf dem Flüssigkeitsbodenmittel in dem Flüssigkeitsraum zwischen dem Wehr und der Turmwand beibehält, und (2) einen Fluidkommunikationskanal (58) bilden; (c) ein erstes Flüssigkeits-Fallrohrmittel (68), das mit dem Stufentrennmittel (40) in Strömungsverbindung steht, un einen Flüssigkeitskommunikationskanal in dem Fluidkommunikationskanal zu bilden, der von dem Flüssigkeitsraum (74) der Flüssigkeits-Dampf-Stufe unmittelbar oberhalb der genannten Flüssigkeits-Dampf-Stufe zu der genannten Flüssigkeits-Dampf-Stufe führt; (d) ein zweites Flüssigkeits-Fallrohrmittel (58), das einen zweiten Flüssigkeitskommunikationskanal bildet, der von dem Flüssigkeitsraum (61) der genannten Flüssigkeits-Dampf-Stufe zu dem Flüssigkeitsraum (62) der Flüssigkeits-Dampf-Stufe unmittelbar unter der genannten Flüssigkeits-Dampf-Stufe (61) führt; (e) einen ersten Dampfkommunikationskanal (72), der von dem Dampfraum (76) unmittelbar übar dem Flüssigkeitsraum (74) der Flüssigkeits-Dampf-Stufe unmittelbar über der genannten Flüssigkeits-Dampf-Stufe zu dem Dampfraum (65) der genannten Flüssigkeits-Dampf-Stufe führt, wobei der erste Dampfkommunikationskanal (72) in dem Fluidkommunikationskanal liegt und äußerlich von der radialen Innenwand (69) des ersten Flüssigkeits-Fallrohrmittels (68) gebildet wird; (f) Dampffallrohrmittel, die einen zweiten Dampfkommunikationskanal (70) bilden, der von der Dampfstufe (65) der genannten Flüssigkeits-Dampf-Stufe zu dem Dampfraum (64) unmittelbar über dem Flüssigkeitsraum der Flüssigkeits-Dampf-Stufe unmittelbar unter der genannten Flüssigkeits-Dampf-Stufe führt, worin die Flüssigkeits-Fallrohre (68, 58) und die Dampf-Fallrohre (72, 70) die Flüssigkeiten und Dämpfe als getrennte, unterschiedliche Ströme halten, die in im wesentlichen paralleler Strömung gezwungen werden, nach unten zu fließen, und zwar durch die Abwesenheit von Dampfauslaßmitteln an der Spitze des Turms und worin der Dampfstrom nicht durch irgendeine Flüssigkeit in irgendeiner nachfolgenden tieferen Stufe strömt; (g) Mittel (45, 44) zum Einleiten einer Flüssigkeit oder eines Dampfes von einer Quelle (30, 26), die außerhalb der Vorrichtung liegt, in den Flüssigkeitsraum (74, 61) der Flüssigkeits-Dampf-Stufe an einem Punkt unter dem Flüssigkeitsspiegel in der Flüssigkeits-Dampf-Stufe, oder, wenn lediglich Flüssigkeit eingeleitet wird, an einem Punkt über dem Flüssigkeitsspiegel der Flüssigkeits-Dampf-Stufe.

2. Vorrichtung nach Anspruch 1, dadurch gekennzeichnet, daß die Dampf- und Flüssigkeits-Fallrohrmittel (70 bzw. 58) Leitungen aufweisen, die von konzentrischen, zylindrischen Leitblechen gebildet sind.

3. Vorrichtung nach Anspruch 2, dadurch gekennzeichnet, daß das Stufentrennmittel (40) ein kegelförmiges Leitblech mit einem Loch in der Mittel aufweist, so daß der Scheider einen äußeren und einen inneren Rand hat.

4. Vorrichtung nach Anspruch 3, dadurch gekennzeichnet, daß der äußere Rand des Stufenscheiders (40) an der Oberseite eines zylindrischen Leitblechs (41) angebracht ist, welches ein Flüssigkeits-Fallrohr (42) bildet, um Flüssigkeit von einer oberen Stufe in den Flüssigkeitsraum (61) der genannten Stufe zu leiten.

5. Verfahren zum Entparaffinieren eines paraffinhaltigen Kohlenwasserstofföls unter Verwendung der Vorrichtung nach einem der Ansprüche 1 bis 4, gekennzeichnet durch die Schritte des Einleitens einer Mischung, die das paraffinhaltige Kohlenwasserstofföl und ein nicht-autorefrigeratives Entparaffinierungs-Lösungsmittel aufweist, in den Speiseeinlaß (14) des im wesentlichen vertikalen, länglichen Turms (16), so daß die daraus erhaltene Mischung oder Aufschlämmung, die Kohlenwasserstofföl, Entparaffinierungsmittel und Paraffin enthält, in dem Flüssigkeitsraum jeder Flüssigkeits-Dampf-Stufe gehalten wird, durch Einleiten (44) eines kalten autorefrigerativen Entparaffinierungslösungsmittel in jede Flüssigkeits-Dampf-Stufe von einer Quelle (26, 28, 30), die außerhalb der Vorrichtung liegt, durch Aufrechterhalten des Überdrucks in dem Turm (16) in dem Bereich von 0 bis 344,75 kPa (0 bis 50 psig), durch Rühren der Mischung oder Aufschlämmung in dem Flüssigkeitsraum jeder Flüssigkeits-Dampf-Stufe durch Drehen der Welle (60) und der daran angebrachten Rührmittel (50), und durch getrenntes Wiedergewinnen von paraffinhaltiger Aufschlämmung und verdampftem Autorefrigerant jeweils von den Flüssigkeits- und Dampfauslässen in dem unteren Abschnitt des Turms.

**Revendications**

1. Appareil comprenant une tour oblongue, sensiblement verticale (16) présentant une entrée d'alimentation (14) à sa partie supérieure et des sorties de liquide et de vapeur à sa partie inférieure, ledit appareil contenant une série d'étages verticalement espacés, disposés sensiblement horizontalement, des moyens pour agiter mécaniquement un liquide ou d'une vapeur introduit, en service dans chacun desdits étages, du liquide étant présent, en service, dans lesdits étages, au moyen d'agitateurs (50) montés sur un arbre unique (60) entraîné par un moyen d'entraînement unique, et des moyens (66, 40) pour séparer lesdits étages l'un de l'autre tout en définissant des canaux de communication de fluide (58, 70) entre lesdits étages, lesdits étages comprenant (a) des plateaux à liquide (46) fixés sensiblement horizontalement aux parois intérieures de ladite tour oblongue sensiblement verticale, chaque plateau (46) présentant une ouverture centrale; (b) des déversoirs (48) fixés sensiblement verticalement aux plateaux à liquide le long du pourtour intérieur desdits plateaux à une certaine distance des parois intérieures de la tour définissant par là (1) un étage de liquide-vapeur (dit ci-après "l'étage de liquide-vapeur cité") comprenant un espace de liquide (61) et une espace de vapeur (65) surmontant ledit espace de liquide, ce qui, en service, maintient une quantité déterminée de liquide sur lesdits plateaux à liquide dans ledit espace de liquide entre le déversoir et la paroi de la tour, et (2) un canal de communication de fluide (58); (c) une première descente de liquide (68) communiquant avec lesdits moyens de séparation entre étages (40) pour définir, dans le canal de communication de fluide, un canal de communication de liquide menant de l'espace de liquide (74) de l'étage de liquide-vapeur surmontant immédiatement l'étage de liquide-vapeur cité à cet étage de liquide-vapeur cité; (d) un second moyen de descente de liquide (58) définissant un second canal de communication de liquide menant de l'espace de liquide (61) de l'étage de liquide-vapeur cité à l'espace de liquide (62) de l'étage de liquide-vapeur immédiatement sous-jacent à cet étage de liquide-vapeur cité (61); (e) un premier canal de communication de vapeur (72) menant de l'espace de vapeur (76) surmontant immédiatement l'espace de liquide (74) de l'étage de liquide vapeur surmontant immédiatement l'étage de liquide-vapeur cité à l'espace de vapeur (65) de l'étage de liquide-vapeur cité, ledit premier canal de communication de vapeur (72) étant situé dans le canal de communication de fluide et délimité extérieurement par la paroi radialement intérieure (69) de ladite première descente de liquide (68); (f) une descente de vapeur définissant un second canal de communication de vapeur (70) menant de l'étage de vapeur (65) de l'espace de liquide-vapeur cité à l'espace de vapeur (64) surmontant immédiatement l'espace de liquide de l'étage de liquide-vapeur immédiatement sous-jacent à cet étage de liquide-vapeur cité, dans lequel les descentes de liquide (68, 58) et les descentes de vapeur (72, 70) maintiennent les liquides et vapeurs sous forme de courants distincts séparés contraints de s'écouler vers le bas sensiblement en parallèle par l'absence de moyen de sortie de vapeur au sommet de la tour et dans lequel le courant de vapeur ne traverse aucun liquide dans aucun étage inférieur successif; (g) des moyens (45, 44) pour introduire, à partir d'une source (30, 26) externe audit appareil, un liquide ou une vapeur dans l'espace de liquide (74, 61) de l'étage de liquide-vapeur à un point situé plus bas que le niveau de liquide de cet étage de vapeur-liquide, ou, si seul du liquide est introduit, à un point plus haut que le niveau de liquide de l'étage de liquide-vapeur.

2. Appareil selon la revendication 1, dans lequel lesdites descentes de vapeur et de liquide (respectivement 70 et 58) comprennent des conduits formés par des écrans cylindriques, concentriques.

3. Appareil selon la revendication 2, dans lequel ledit moyen de séparation entre étages (40) comprend un écran conique avec un trou central, si bien que ledit séparateur présente un bord périphérique extérieur et un bord périphérique intérieur.

4. Appareil selon la revendication 3, dans lequel le bord périphérique extérieur dudit séparateur entre étages est attaché au sommet d'un écran cylindrique (41) qui définit une descente de liquide (42) pour diriger le liquide provenant d'un étage supérieur jusque dans l'espace de liquide de l'étage cité.

5. Procédé de paraffinage d'une huile d'hydrocarbures paraffiniques en utilisant un appareil selon l'une des revendications 1 à 4, comprenant les étapes de:

— introduction d'un mélange contenant l'huile d'hydrocarbures paraffinique et un solvant de déparaffinage non auto-réfrigérant dans l'entrée d'alimentation (14) de la tour oblongue sensiblement verticale (16), de telle façon que ledit mélange, ou une suspension qui en est dérivée, et qui comprend l'huile d'hydrocarbures, le solvant de déparaffinage et la paraffine, est maintenue dans l'espace de liquide de chaque étage de liquide-vapeur;

— introduction (44) d'un solvant de déparaffinage froid, auto-réfrigérant, dans chaque étage de liquide-vapeur, à partie d'une source (26, 28, 30) externe audit appareil;

— maintien de la pression manométrique dans la tour (16) à l'intérieur de la gamme de 0 à 344,75 kPa (0 à 50 psig);

— agitation dudit mélange ou suspension dans l'espace de liquide de chaque étage de liquide-vapeur en faisant tourner ledit arbre (60) et les agitateurs (50) montés sur lui; et

— récupération séparée de la suspension paraffinique et de l'auto-réfrigérant vaporisé, respectivement à partir des sorties de liquide et de vapeur situées à la partie inférieure de la tour.

LEGEND
VAPOR FLOW ----------→
LIQUID FLOW ——————→
LIQUID AUTOREFRIGERANT ——→